# EUROPÄISCHE PATENTSCHRIFT

(11) **EP 0 565 768 B1**
(45) Veröffentlichungstag und Bekanntmachung des Hinweises auf die Patenterteilung: **06.12.1995**
(21) Anmeldenummer: 92115924.0
(22) Anmeldetag: 17.09.1992
(51) Int. Cl.: B60T 7/08, F16D 65/60

(54) **Mit einer selbsttätigen Nachstelleinrichtung versehene Handbremse**
Handbrake provided with automatic adjuster
Frein à main muni de rajustage automatique

(30) Priorität: 17.04.1992 DE 4211566
(43) Veröffentlichungstag der Anmeldung: 20.10.1993
(73) Patentinhaber: ED. Scharwächter GmbH & Co.KG., D-42855 Remscheid (DE)
(72) Erfinder: Heinemann, Heinz-Walter, W-5600 Wuppertal 21 (DE); Bode, Sven, W-5630 Remscheid (DE)
(74) Vertreter: Schön, Theodor, Patent- und Zivilingenieur

(56) Entgegenhaltungen:
- EP-A- 0 351 131
- EP-B- 0 162 749
- DE-U- 8 900 087
- US-A- 5 001 942

## Beschreibung

Die Erfindung bezieht sich auf eine mit einer selbsttätigen Nachstelleinrichtung versehene Handbremse für Kraftfahrzeuge, welche einen zweiteiligen an einer karosseriefesten Konsole schwenkbar gelagerten und mit einem auf die Radbremsorgane wirkenden Zugmittel gekoppelten Handbremshebel, sowie eine diesem zugeordnete, aus einer am Handbremshebel schwenkbar gelagerten und mittels einer innerhalb des Handbremshebels längsverstellbar angeordneten Betätigungsstange auslösbaren Sperrklinke und einem mit dieser zusammenwirkenden ortsfest an der karosseriefesten Konsole ausgebildeten Zahnsegment bestehende Feststelleinrichtung umfaßt, und bei der das den Handbremshebel mit den Radbremsorganen verbindende Zugmittel vermittels einer zu dessen Schwenkachse konzentrisch angeordneten, diesem gegenüber lediglich bei gelöster Handbremse relativ beweglichen, über einen Teil ihres Umfanges hin als Zahnscheibe ausgebildete und in einer Drehrichtung durch eine Federlast beaufschlagte Nachstellscheibe und eine am Handbremshebel gelagerte, mit der Umfangsverzahnung der Nachstellscheibe zusammenwirkende Transportklinke mit dem Handbremshebel gekoppelt ist.

Eine solche Handbremse für Kraftfahrzeuge ist zunächst aus der US-A-5 901 942 bekannt. Diese bekannte Handbremse bzw. deren Nachstelleinrichtung zeichnet sich weiter dadurch aus, daß die Nachstellscheibe über einen ersten Teil ihres Umfanges hin als Zahnscheibe ausgebildet ist und über einen weiteren Teil ihres Umfanges hin ein Führungsbett für das zu den Radbremsorganen führende Zugmittel aufweist sowie in einer Drehrichtung durch eine Federlast beaufschlagt ist.
Charakteristisch und gleichzeitig auch nachteilig ist an dieser bekannten Bauart einer mit einer selbsttätigen Nachstelleinrichtung ausgestatten Handbremse, daß sie mit einer beträchtlichen Baubreite behaftet ist, was die Unterbringung bzw. den Einbau dieser bekannten Handbremse im Fahrzeug erschwert, wenn nicht gar in manchen Fällen unmlöglich macht. Neben diesem Nachteil, der im wesentlichen aus einer nebeneinanderliegenden Anordnung von Nachstellscheibe und Belastungsfeder resultiert, ist die bekannte Bauart mit dem weiteren Nachteil behaftet, daß die mit der Nachstellscheibe zusammenwirkende, mit dem Handbremshebel über eine Langlochausnehmung und lediglich fliegend gekoppelte Transportklinke ungeführt und lediglich unter der Wirkung einer Schenkelfeder mit der Umfangsverzahnung der Nachstellscheibe im Eingriff gehalten ist. Bei zunehmender, nach längerer Betriebszeit unvermeidlicher Ablagerung von Schmutz und dergl. sowohl in der Umfangsverzahnung der Nachstellscheibe als auch in der fliegend gestalteten Lagerung der Transportklinke kann bei der bekannt Bauart einer Nachstelleinrichtung für eine Handbremse ein sicheres Zusammenwirken der Transportklinke mit der Nachstellscheibe nicht gewährleistet werden. Ferner kann aus der einseitigen, d.h. schräg zu ihrer Anlenkachse gerichteten, Beaufschlagung der Nachstellscheibe mit der Federlast der Nachstellfeder im Laufe der Zeit auch noch eine gewisse Verkantung der Nachstellscheibe innerhalb der karossereseitigen Konsole resultieren.

Mit den Nachteilen zum einen einer verhältnismäßig großen Baubreite der Handbremse insgesamt und zum anderen einer ungeführten und daher, insbesondere nach längerer Betriebszeit unsicheren Wirkungsweise der Transportklinke ist im Übrigen auch die aus der EP-A-0 351 131 bekannte Handbremse behaftet.
Bei der Nachstellvorrichtung für diese Handbremse ist eine zur Schwenklagerung des Handbremshebels konzentrisch und von diesem unabhängig gelagerte und in einer Drehrichtung mit der Last einer Spiralfeder beaufschlagte Nachstellscheibe durch ein umfangsverzahntes Scheibensegment gebildet und wird beim Anziehen der Handbremse vermittels einer an diesem gelagerten, in Einrückrichtung durch eine Schenkelfeder federbelastete Transportklinke selbsttätig mit dem Handbremshebel gekoppelt. Die Transportklinke ist hierbei als Kipphebel ausgeführt, welcher über seinen einen Hebel- arm mit der Umfangsverzahnung des die Nachstellscheibe bildenden Scheibensegmentes und über seinen anderen Hebelarm mit einem an der karosseriefesten Konsole ortsfest angeordneten Rückstellan- schlag zusammenwirkt, derart, daß bei vollständig in die Lösestellung geschwenktem Handbremshebel dessen Koppelung mit der Nachstellscheibe aufgehoben wird und die Nachstellscheibe nunmehr ausschließlich unter dem Einfluß der sie beaufschlagenden Spiralfeder steht.
Diese Bauart einer mit einer selbsttätigen Nachstelleinrichtung versehenen Handbremse stellt sehr hohe Anforderungen an die Spielfreiheit der Lagerung der Transportklinke zugeordneten Rückstellanschlages, da bereits ein verhältnismäßig geringfügiges Verkanten der im Übrigen nicht geführten Transportklinke deren sicheres Zusammenwirken mit dem gegebenenfalls im Bereich der Toleranzgrenze angeordneten Rückstellanschlag und somit die Funktionssicherheit der Nachstelleinrichtung insgesamt in Frage stellen kann. Darüberhinaus sind bei der bekannten Bauart einer Nachstelleinrichtung die willkürlich betätigbare Sperrklinke zum Feststellen des Handbremshebels seiner der angezogenen Handbremse entsprechenden Lage und die Transportklinke der Nachstellscheibe auf dem gleichen Lagerstift und gegebenenfalls in unmittelbarer gegenseitiger Anlage angeordnet, woraus, insbesondere bei zunehmender Korrosion und/oder Verschmutzung vor allem der Lagerstellen die Gefahr resultiert, daß beim Betätigen der Transportklinke unabsichtlich und fehlerhaft auch die Transportklinke verstellt wird, was eine weitere Beeinträchtigung der Funktionssicherheit der bekannten Handbremse zur Folge hat.

Bei einer anderen bekannten Bauart einer solchen mit einer selbsttätigen Nachstelleinrichtung versehenen Handbremse für Kraftfahrzeuge (EP-A-0 162 749) ist das zu den Radbremsorganen führende Zugmittel an ein eine Nachstellscheibe bildendes Scheibensegment angeschlossen, welches an der karosseriefesten Konsole um eine zur Anlenkachse des Handbremshebels konzentrische Achse schwenkund axial verstellbar gelagert ist und welches in Umfangsrichtung unter der Last einer Torsionsfeder steht, derart, daß das zu den Radbremsorganen führende Zugmittel bei vom Handbremshebel entkoppelter Nachstellscheibe unter einer gewissen Federlast spielfrei gehalten ist. Mit dem Handbremshebel steht die Nachstellscheibe hierbei über eine Zahnkupplung in formschlüssigem Eingriff, wobei die Zahnkupplung vermittels einer axial gerichteten Federkraft im Eingriff gehalten ist.

Diese bekannte Nachstelleinrichtung erfordert einen erheblichen Aufwand an Einzelteilen und für deren Zusammenbau, insbesondere im Hinblick darauf, daß die Funktionssicherheit der mit einer solchen Nachstelleinrichtung ausgestatteten Handbremse sehr wesentlich von der Eingriffssicherheit der die Nachstellscheibe und damit das zu den Radbremsorganen führende Zugorgan mit dem Handbremshebel koppelnden Kupplung abhängig ist. Ein sehr ins Gewicht fallender Nachteil dieser bekannten Bauart einer Nachstellvorrichtung ist ferner in deren durch die erforderliche axiale Verstellbarkeit der Nachstellscheibe begündeten, sehr großen Bedarf an Einbauraum im Fahrzeug zu sehen.

Ausgehend von diesem Stand der Technik liegt der Erfindung die Aufgabe zugrunde, eine mit einer selbsttätigen Nachstelleinrichtung versehene Handbremse für Kraftfahrzeuge dahingehend zu verbessern, daß sie zum Einen mit einem geringstmöglichen Aufwand herstell- und montierbar ist, sowie mit einem geringstmöglichen Bedarf an Einbauraum auskommt und daß zum Anderen eine optimale Funktionssicherheit sowohl der Bremsbetätigung als auch der Nachstelleinrichtung gewährleistet ist.

Diese Aufgabe wird erfindungsgemäß dadurch gelöst, daß die Transportklinke vermittels einer im wesentlichen tagential zum Umfang der Nachstellscheibe ausgerichteten Steuerkante an einer an der karosseriefesten Konsole ausgebildeten Führung anliegt und mit dieser vermittels einer zu ihrer Anlenkachse konzentrisch angeordneten, gegen den Handbremshebel abgestützten Schenkelfeder in Anlage gehalten ist und daß ferner Transportklinke, Nachstellscheibe und Zugfeder in einer gemeinsamen Ebene angeordnet sind.

Diese erfindungsgemäße Ausbildung einer Handbremse und insbesondere deren Nachstelleinrichtung ermöglicht eine zur Lage des Zugmittels parallele Ausrichtung der an der Nachstellscheibe angreifenden Federlast und damit eine insgesamt symetrische Belastungsverteilung in der Nachstellscheibe, mit dem Vorteil, daß ein Verkanten der Nachstellscheibe unter unsymetrischer Belastung ausgeschlossen ist, woraus wiederum eine Erhöhung der Eingriffssicherheit der der Nachstellscheibe zugeordneten und mit dieser in einer gemeinsamen Ebene angeordneten Transportklinke resultiert, so daß beide Teile aus verhältnismäßig dünnwandigen Blechzuschnitten bestehen können. Die von sonstigen Funktionsteilen der Handbremse unabhängige Anordnung und geführte Lagerung der Transportklinke gewährleistet in Verbindung mit deren Führung an der karosseriefesten Konsole gleichzeitig auch ein absolut sicheres Ein- bzw. Ausrücken der Transportklinke beim Anziehen der Handbremse bzw. beim Einlaufen des Handbremshebels in seine Lösestellung.

Vorteilhafte Ausgestaltungsformen der Erfindung sind in den Unteransprüchen 2 bis 8 angegeben.

Die Erfindung ist in der nachfolgenden Beispielsbeschreibung anhand eines in der Zeichnung dargestellten Ausführungsbeispieles im Einzelnen beschrieben.

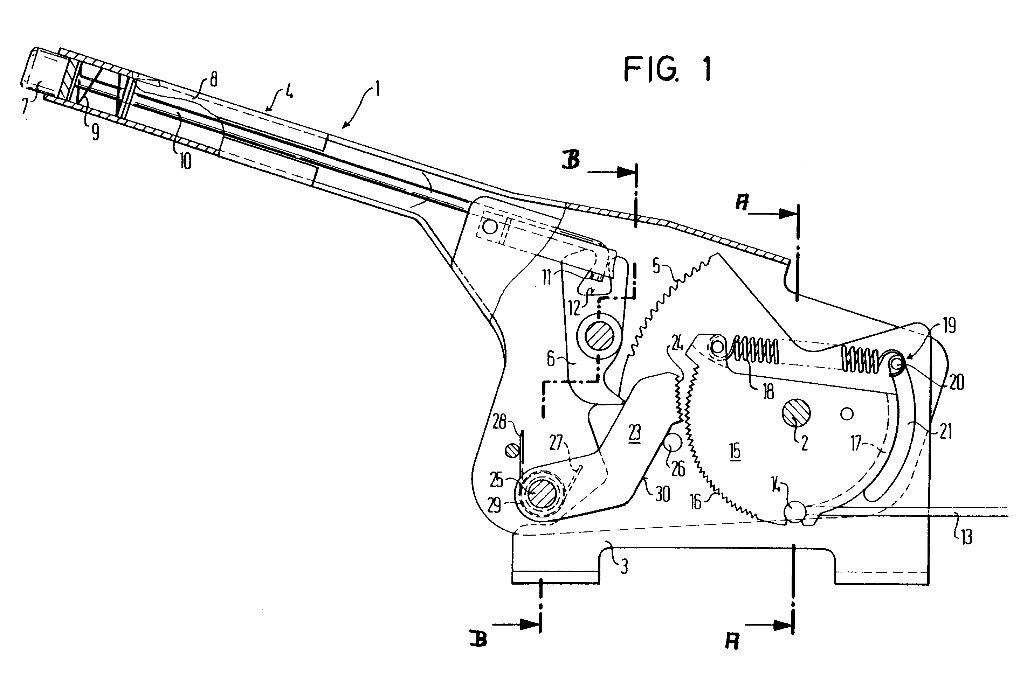

In der Zeichnung zeigt die
- Figur 1:: eine teilweise aufgebrochene Seitenansicht einer mit einer Nachstelleinrichtung versehenen Handbremse;
- Figur 2:: einen Schnitt durch die Handbremse entlang der Linie B-B in Figur 1;
- Figur 3:: einen Schnitt durch die Handbremse entlang der Linie A-A in Figur 1.

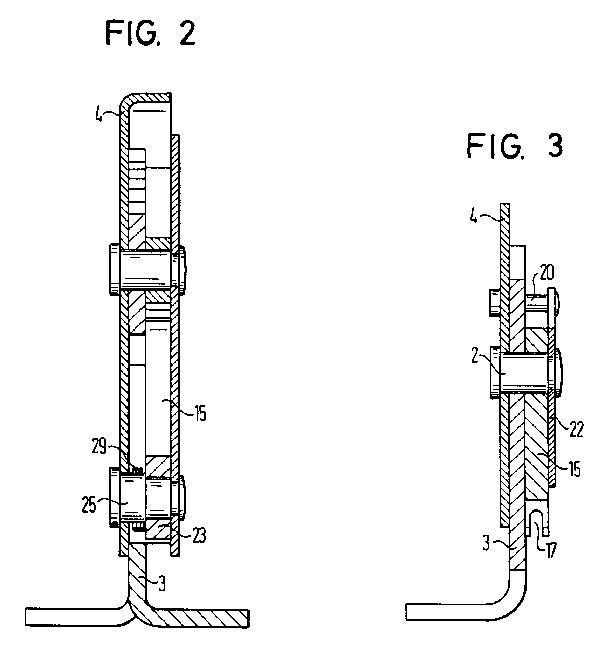

Eine im allgemeinen mit 1 bezeichnete Handbremse weist einen zweiteiligen, mittels eines Lagerbolzens 2 schwenkbar an einer karosseriefesten Konsole 3 angelenkten Handbremshebel 4 auf, an welchen zum Feststellen des Handbremshebels 4 in einer der feangezogenen Handbremse entsprechende Stellung eine mit einem an der karosseriefesten Konsole 3 ausgebildeten Zahnsegment 5 zusammenwirkende Sperrklinke 6 schwenkbar gelagert ist. Dem Auslösen der Sperrklinke 6 ist eine mittels eines Druckknopfes 7 entgegen der Kraft einer Druckfeder 9 axial verschiebbar im Schaftteil 8 des Handbremshebels 4 geführte Betätigungsstange 10 zugeordnet, die vermittels einer Endabwinkelung 11 mit einer Ausnehmung 12, der als Kipphebel ausgeführten Sperrklinke 6 im formschlüssigen Eingriff steht. Ein den Handbremshebel 4 mit den in der Zeichnung nicht gezeigten Radbremsgliedern verbindendes Zugmittel, insbesondere ein Zugseil 13, ist vermittels eines Kupplungsteiles 14 an eine Nachstellscheibe 15 angeschlossen, welche ihrerseits frei drehbar und in zum Handbremshebel 4 paralleler Anordnung auf dem Lagerbolzen 2 gelagert ist. Die Nachstellscheibe 15 ist als Teil-Kreisscheibe ausgebildet und über die eine Hälfte ihres Umfanges hin mit einem Auflagebett 17 für das Zugseil 13 versehen. In zur Ausrichtung des Zugseiles 13 paralleler Ausrichtung und dem Zugseil 13 gegenüberliegend greift an der Nachstellscheibe 15 eine als Schraubenfeder 18 ausgebildete und bei 19 gegen den Handbremshebel 4 abgestützte Zugfeder an, welche die Nachstellscheibe 15 im Sinne eines Spannens des Zugseiles 13 zu drehen sucht. Die handbremshebelseitige Abstützung der Zugfeder besteht, wie insbesondere aus der Darstellung der Figur 3 ersichtlich, aus einem eine zur Nachstellscheibe 15 konzentrisch gekrümmte Schlitzausnehmung 21 in der karosseriefesten Konsole 3 durchgreifenden Stift 20, welcher einerseits am Handbremshebel 4 und andererseits an einem Abdeckblech 22 durch Vernieten festgelegt ist. Um beim Anziehen der Handbremse eine drehsichere Koppelung des Handbremshebels 4 mit der Nachstellscheibe 15 zu gewährleisten, ist am Handbremshebel 4 eine Transportklinke 23 angelenkt, welche an ihrem freien Ende ein zur Umfangsverzahnung 5 der Nachstellscheibe 15 komplementäres Zahnsegment 24 aufweist. Die beliebig gestaltbare Transportklinke 23 ist mit der Nachstellscheibe 15 in einer gemeinsamen Ebene angeordnet und weist zweckmäßigerweise eine im Allgemeinen S-förmige Grundrißform auf, wobei sie am Handbremshebel 4 vermittels eines Bundbolzens 25, welcher mit dem Abdeckblech 22 vernietet ist, gelagert und geführt ist. Die Transportklinke 23 ist ferner gleitend an einer an der karosseriefesten Konsole 3 angeordneten, durch einen Zapfen 26 gebildeten Führung abgestützt bzw. in Einrückrichtung gleitend geführt. Zur Sicherung ihrer Anlage an der Führung 26 ist die Transportklinke 23 durch den einen Schenkel 27 einer auf dem Bundbolzen 25 angeordneten und mit ihrem anderen Schenkel 28 gegen den Handbremshebel 4 abgestützten Schenkelfeder 29 belastet, derart, daß sie mit ihrer Führungskante 30 in ständiger Anlage mit der Führung 26 gehalten ist.

## Patentansprüche

1. Mit einer selbsttätigen Nachstelleinrichtung versehene Handbremse für Kraftfahrzeuge, welche einen zweiteiligen an einer karosseriefesten Konsole (3) schwenkbar gelagerten und mit einem auf die Radbremsorgane wirkenden Zugmittel (13) gekoppelten Handbremshebel (4), sowie eine diesem zugeordnete, aus einer am Handbremshebel (4) schwenkbar gelagerten und mittels einer innerhalb des Handbremshebels (4) längsverstellbar angeordneten Betätigungsstange (10) auslösbaren Sperrklinke und einem mit dieser zusammenwirkenden, ortsfest an der karosseriefesten Konsole (3) ausgebildeten Zahnsegment (5) bestehende Feststelleinrichtung umfaßt, und bei der das den Handbremshebel (4) mit den Radbremsorganen verbindende Zugmittel (13) vermittels einer zu dessen Schwenkachse (2) konzentrisch angeordneten, diesem gegenüber lediglich bei gelöster Handbremse relativ beweglichen, über einen Teil ihres Umfanges hin als Zahnscheibe ausgebildete und in einer Drehrichtung durch eine Federlast (Zugfeder 18) beaufschlagte Nachstellscheibe (15) und eine am Handbremshebel (4) gelagerte, mit der Umfangsverzahnung (16) der Nachstellscheibe (15) zusammenwirkende Transportklinke (23) mit dem Handbremshebel (4) gekoppelt ist, dadurch gekennzeichnet, daß die Transportklinke (23) vermittels einer im wesentlichen tangential zum Umfang der Nachstellscheibe (15) ausgerichteten Steuerkante (30) an einer an der karosseriefesten Konsole (3) ausgebildeten Führung (26) anliegt und mit dieser vermittels einer zu ihrer Anlenkachse (25) konzentrisch angeordneten, gegen den Handbremshebel (4) abgestützten Schenkelfeder (29) in Anlage gehalten ist und daß ferner Transportklinke (23) und Nachstellscheibe (25) in einer gemeinsamen Ebene angeordnet sind.

2. Handbremse nach Anspruch 1, dadurch gekennzeichnet, daß die Nachstellscheibe (15) und die dieser zugeordnete Transportklinke (23) durch Blechmaterialzuschnitte gebildet und in einer gemeinsamen Ebene angeordnet sind.

3. Handbremse nach Anspruch 1 und 2, dadurch gekennzeichnet, daß die Transportklinke (23) als einarmiger Hebel ausgebildet und an ihrem freien Ende mit einem zur Umfangsverzahnung (16) der Nachstellscheibe (15) komplementären Zahnsegment (24) ausgestattet ist.

4. Handbremse nach Anspruch 1 bis 3, dadurch gekennzeichnet, daß die an der karosseriefesten Konsole (3) ausgebildete Führung (26) für die Transportklinke (23) durch einen seitlich auskragend angeordneten Rundmaterialzapfen gebildet ist.

5. Handbremse nach Anspruch 1 bis 4, dadurch gekennzeichnet, daß die Nachstellscheibe (15) durch eine an ihr angreifende und am Handbremshebel (4) abgestützte, geradlinige Schraubenfeder (18) mit einer Federlast beaufschlagt ist.

6. Handbremse nach Anspruch 1 bis 5, dadurch gekennzeichnet, daß der Abstützung (19) der Schraubenfeder (18) eine zur Nachstellscheibe (15) konzentrisch gekrümmte Schlitzausnehmung (21) in der karosseriefesten Konsole (3) zugeordnet ist.

7. Handbremse nach Anspruch 1 bis 6, dadurch gekennzeichnet, daß der Handbremshebel (4) insgesamt als ein eine im Wesentlichen schalenförmige Profilquerschnittsform aufweisendes Blechformteil ausgebildet ist und wenigstens die Transportklinke (23) sowie die Nachstellscheibe (15) von einem Abdeckblech (22) übergriffen sowie im Wesentlichen spielfrei zwischen Abdeckblech (22) und karosseriefester Konsole (3) gehalten bzw. geführt sind.

8. Handbremse nach Anspruch 1 bis 7, dadurch gekennzeichnet, daß der den Handbremshebel (4) und die Nachstellscheibe (15) lagernde Lagerbolzen (2), der die Transportklinke (23) lagernde Bundbolzen (25) und der die Abstützung (19) der Zugfeder (18) bildende Stift, sowie der die Transportklinke lagernde Zapfen mit dem Abdeckblech (22) durch Vernietung verbunden und jeweils mit einem Kopfteil eine Ausnehmung im Handbremshebel (4) hintergreifend angeordnet sind.

## Claims

1. Hand brake provided with an automatic adjuster, for motor vehicles, which comprises a two-part hand brake lever (4) tiltably mounted on a bracket (3) integral with the bodywork and connected to tension means (13) acting on the wheel brake members, as well as a locking device consisting of a ratchet tiltably mounted on the hand brake lever (4) and able to be released by means of an actuating rod (10) arranged to move longitudinally within the hand brake lever (4) and a toothed segment (5) cooperating with this ratchet and constructed in a fixed manner on the bracket (3) integral with the bodywork, and in which the tension means (13) connecting the hand brake lever (4) to the wheel brake members is connected to the hand brake lever (4) by means of an adjusting disc (15) arranged concentrically to its pivot axis (2), able to move relative to the latter solely when the hand brake is released, is constructed over part of its periphery as a toothed disc and is acted upon in one direction of rotation by a spring load (tension spring 18) and a spacing pawl (23) mounted on the hand brake lever (4) and cooperating with the peripheral toothing (16) of the adjusting disc (15), characterised in that the spacing pawl (23) bears by means of a control edge (30) aligned substantially tangentially with respect to the periphery of the adjusting disc (15), against a guide (26) constructed on the bracket (3) integral with the bodywork and is held in abutment with the latter by means of a leg spring (29) arranged concentrically with respect to its pivot axis (25) and supported against the hand brake lever (4) and that furthermore the spacing pawl (23) and adjusting disc (25) are located in a common plane.

2. Hand brake according to Claim 1, characterised in that the adjusting disc (15) and the spacing pawl (23) associated therewith are formed by sheet metal material blanks and are arranged in a common plane.

3. Hand brake according to Claim 1 and 2, characterised in that the spacing pawl (23) is constructed as a one-armed lever and at its free end is provided with a toothed segment (24) complementing the peripheral toothing (16) of the adjusting disc (15).

4. Hand brake according to Claims 1 to 3, characterised in that the guide (26), constructed on the bracket (3) integral with the bodywork, for the spacing pawl (23), is formed by a round material journal arranged to project laterally.

5. Hand brake according to Claims 1 to 4, characterised in that the adjusting disc (15) is acted upon by a spring load by a rectilinear helical spring (18) acting thereon and supported on the hand brake lever (4).

6. Hand brake according to Claims 1 to 5, characterised in that associated with the support (19) of the helical spring (18) is a slotted recess (21) curved concentrically with respect to the adjusting disc (15), in the bracket (3) integral with the bodywork.

7. Hand brake according to Claims 1 to 6, characterised in that as a whole the hand brake lever (4) is constructed as a sheet metal shaped part having a substantially shell-like profile cross-sectional shape and at least the spacing pawl (23) as well as the adjusting disc (15) are overlapped by a cover plate (22) and are held or guided substantially without play between the cover plate (22) and the bracket (3) integral with the bodywork.

8. Hand brake according to Claims 1 to 7, characterised in that the bearing bolt (2) mounting the hand brake lever (4) and the adjusting disc (15), the flange bolt (25) mounting the spacing pawl (23) and the pin forming the support (19) for the tension spring (18), as well as the journal mounting the spacing pawl are connected to the cover plate (22) by riveting and in each case are arranged to engage by a head part behind a recess in the hand brake lever (4).

## Revendications

1. Frein à main pour véhicules automobiles, pourvu d'un dispositif de réglage automatique, qui comprend:
- un lever de frein à main (4) en deux parties, articulé sur une console (3) solidaire de la carrosserie et couplé avec un moyen de traction (13) agissant sur les organes de freinage des roues,
- un dispositif de blocage coopérant avec le levier de frein à main, qui se compose d'un cliquet de blocage articulé sur le levier de frein à main (4), actionné par une barre de commande (10) logée à l'intérieur du levier de frein à main en y étant déplaçable longitudinalement, et, d'un segment denté (5) fixe, coopérant avec le cliquet de blocage et prévu sur la console (3) solidaire de la carrosserie,
où le moyen de traction (13) reliant le levier de frein à main (4) aux organes de freinage des roues est couplé avec ledit levier de frein à main par l'intermédiaire
- d'un disque de réglage (15) concentrique à l'axe d'articulation (2) du levier de frein à main, mobile par rapport à ce dernier uniquement lorsque le frein à main est desserré, pourvu sur une partie de sa périphérie d'une denture, subissant dans un des sens de rotation la charge d'un ressort (ressort de traction 18), et
- d'un cliquet de transport (23) articulé sur le levier de frein à main (4) et coopérant avec la denture (16) du disque de réglage (15),
*caractérisé en ce que* le cliquet de transport (23) s'appuie, par l'intermédiaire d'un bord de guidage (30) tangentiel à la périphérie du disque de réglage (15), sur un élément de guidage (26) prévu sur la console (3) solidaire de la carrosserie et est maintenu au contact dudit élément de guidage grâce à un ressort à branche (29) concentrique à l'axe d'articulation dudit cliquet de transport et s'appuyant sur ce dernier, le cliquet de transport et le disque de réglage étant disposés dans un plan commun.

2. Frein à main selon selon la revendication 1 *caractérisé en ce que* le disque de réglage (15) et le cliquet de transport (23) coopérant avec ledit disque de réglage sont constitués par des pièces de tôle et sont disposés dans un plan commun.

3. Frein à main selon les revendications 1 et 2 *caractérisé en ce que* le cliquet de transport (23) est constitué d'un levier à bras unique dont l'extrémité libre est pourvue d'une denture (24) complémentaire de la denture (16) périphérique du disque de réglage (15).

4. Frein à main selon les revendications 1 et 2 *caractérisé en ce que* l'élément de guidage (26) prévu sur la console (3) solidaire de la carrosserie et destiné au guidage du cliquet de transport (23) est constitué d'un tenon (26) de ronds saillant latéralement.

5. Frein à main selon les revendications 1 à 4 *caractérisé en ce que* le disque de réglage (15) subit la charge d'un ressort à boudin (18) droit s'appuyant d'une part sur ledit disque de réglage et d'autre part sur le levier de frein à main (4).

6. Frein à main selon les revendications 1 à 5 *caractérisé en ce que* l'appui (19) du ressort à boudin (18) coopère avec un évidement en forme de fente (21) recourbée concentriquement au disque de réglage (15) et ménagée dans la console (3) solidaire de la carrosserie.

7. Frein à main selon les revendications 1 à 6 *caractérisé en ce que* le levier de frein à main (4) est constitué d'une pièce façonnée en tôle avec une section transversale sensiblement en forme de cuvette et *en ce que* au moins le cliquet de transport (23) et le disque de réglage (15) sont recouverts par une tôle de protection (22) et sont maintenus, respectivement guidés, essentiellement sans jeu entre ladite tôle de protection (22) et la console (3) solidaire de la carrosserie.

8. Frein à main selon les revendications 1 à 7 *caractérisé en ce que* le tourillon (2) assurant l'articulation du levier de frein à main (4) et du disque de réglage (15), le boulon à collet (25) assurant l'articulation du cliquet de transport (23) et la broche assurant l'appui (19) du ressort de traction (18) sont assemblés par rivetage avec la tôle de protection (22), les têtes de rivet étant saillantes sur les évidements correspondants dans le levier de frein à main (4).
